(19) Europäisches Patentamt
European Patent Office
Office européen des brevets

(11) **EP 2 056 553 A1**

(12) **EUROPEAN PATENT APPLICATION**

(43) Date of publication:
**06.05.2009 Bulletin 2009/19**

(51) Int Cl.:
***H04L 27/26*** (2006.01)

(21) Application number: **07021302.0**

(22) Date of filing: **31.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Panasonic Corporation**
**Kadoma-shi**
**Osaka 571-8501 (JP)**

(72) Inventors:
• **Kursaww, Thomas**
**63225 Langen (DE)**
• **Scheid, Albrecht**
**63225 Langen (DE)**

(74) Representative: **Grünecker, Kinkeldey,**
**Stockmair & Schwanhäusser**
**Anwaltssozietät**
**Leopoldstraße 4**
**80802 München (DE)**

(54) **Dynamic tone reservation for PAPR reduction**

(57)     The present invention relates to a method for reducing peak-to-average power ratio (PAPR) in an Orthogonal Frequency Division Multiplexing (OFDM) communication system, and more particularly, to a method for reducing PAPR in an OFDM communication system by allocating sub-carriers to a tone reservation scheme. According to the present invention, a variable number of sub-carriers is reserved for PAPR reduction. This number of sub-carriers is dynamically determined to meet the PAPR reduction target on a symbol-by-symbol basis. This allows the use of a reduced number of reserved sub-carriers depending on the actual payload data. The remaining non reserved sub-carriers can be used for data transmission, thus increasing the data rate.

Fig. 7

EP 2 056 553 A1

**Description**

The present invention relates to reducing peak-to-average power ratio (PAPR) in a broadband communication system employing a plurality of sub-carriers, and more particularly, to a method for reducing PAPR in an Orthogonal Frequency Division Multiplexing (OFDM) communication system communication system by dynamically allocating a variable number of sub-carriers to a tone reservation scheme.

BACKGROUND OF THE INVENTION

Orthogonal frequency division multiplexing (OFDM) is an efficient modulation technique for data transmission over multi-path fading channels. It has been successfully adopted in several wired and wireless standards such as digital video broadcasting (DVB), digital subscriber line (DSL) and wireless local area network (WLAN) technologies. An OFDM signal can be written in the following analytic form

$$s(t) = \sum_{n=-\infty}^{+\infty} \sum_{m=0}^{N-1} a_{m,n}(t) \qquad (1)$$

where $a_{m,n}$ ($n \in Z$; $m = 0, 1, ...,N$ -1) denotes the baseband modulated information symbol conveyed by the sub-carrier of index m during the symbol time of index n.

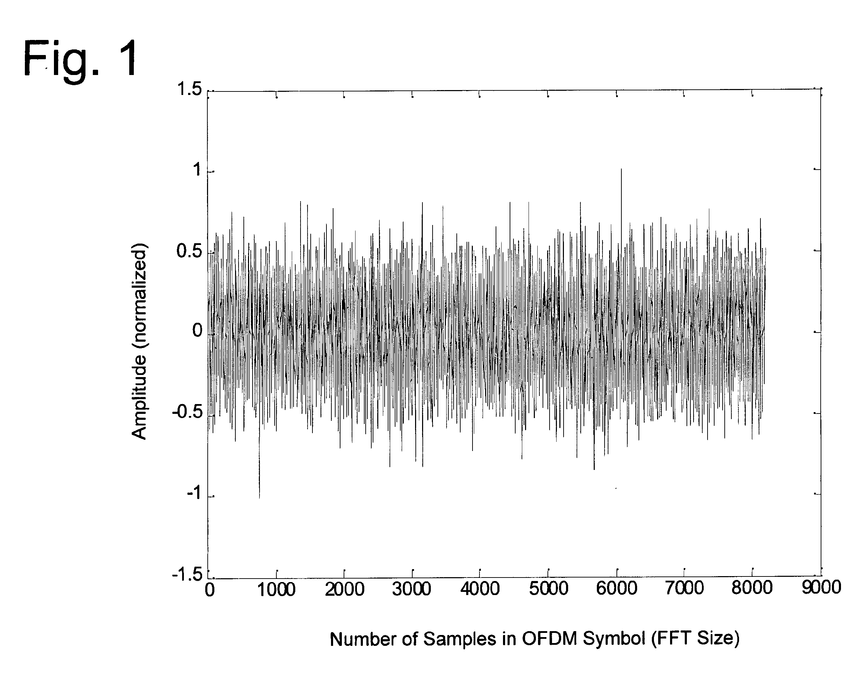

One issue with OFDM modulation is that it suffers from a high peak-to-average power ratio (PAPR); namely, the peak signal amplitudes can often be significantly larger than the average signal amplitude. This issue is illustrated in Fig. 1, which shows a time domain signal for a single, exemplary OFDM symbol. It can be seen that the amplitude of the time domain signal varies significantly over time.

The PAPR value (in dB) for an OFDM symbol s is defined as

$$PAPR_{\{s\}} = 10 \log \left( \frac{\max |s|^2}{E\left[|s|^2\right]} \right). \qquad (2)$$

Thus, the PAPR is the ratio of the maximum power and the averaged power of an OFDM symbol.

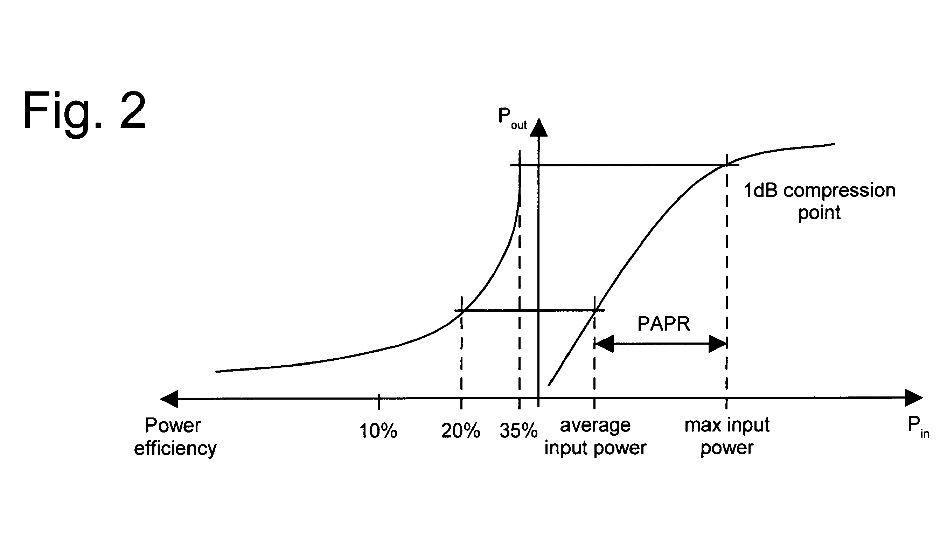

For example, a PAPR of 13dB will cause the RF power amplifier to be rated at 20 times the average power to cope with peaks in the OFDM signal. As a result, highly linear power amplifiers with a large dynamic range must be used or the signal peaks will be clipped at the amplifier's output. Also the efficiency in terms of power is very low with high PAPR values because the operating point of the amplifier must be chosen in a way to avoid clipping for high signal peaks. The plot of the power efficiency versus output power $P_{out}$ on the left side and input power $P_{in}$ versus output power $P_{out}$ on the right side for a class-A amplifier is illustrated in Fig. 2.

According to Eq. (2), the ratio PAPR is defined as the ratio between maximum instantaneous input power and average input power. Due to the above-mentioned reasons the use of highly linear amplifiers with large dynamic range, which do not result in clipping, may be quite costly and/or consume significant amounts of power. On the other hand, clipping may cause in-band distortion that reduce the signal-to-noise ratio (SNR) and/or cause out-of-band radiation resulting in interference to users in adjacent channels. Accordingly, a low cost, low power, low distortion solution to reducing PAPR is required.

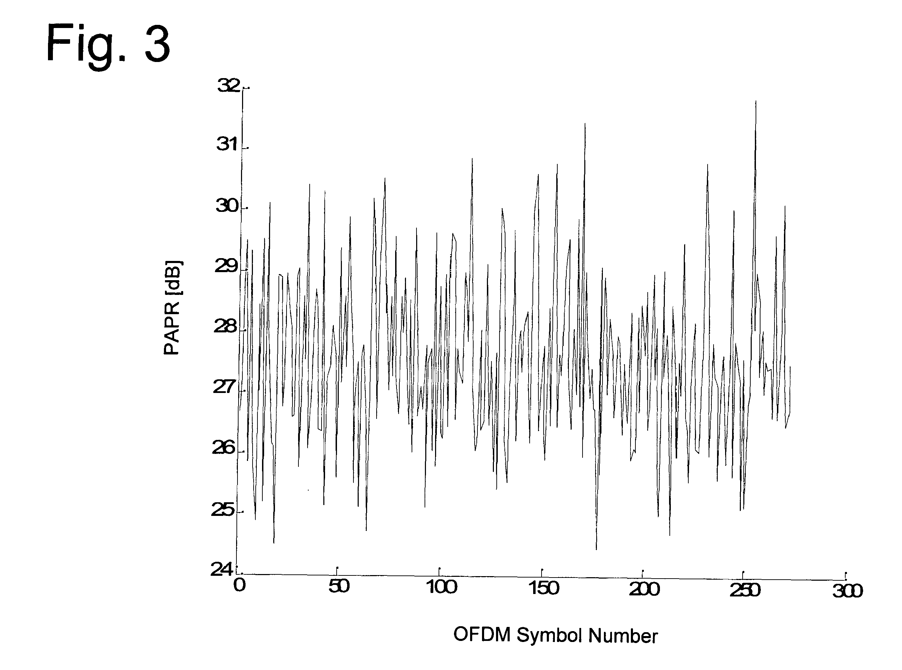

Figure 3 is graph of PAPR values of several consecutive OFDM symbols. As it is apparent from this figure, the PAPR of OFDM symbols is not constant but can vary significantly from one symbol to another.

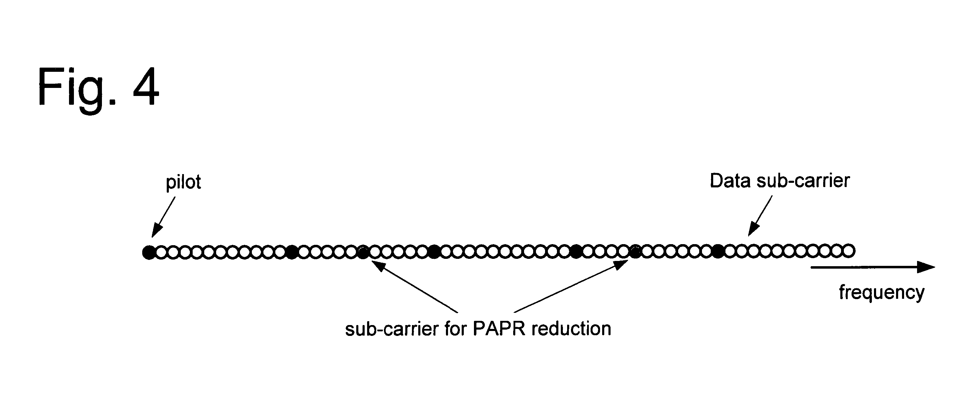

Fig. 4 illustrates a conventional approach of PAPR reduction. The plurality of sub-carriers is represented in the figure by circles. Open circles are sub-carriers used for data transmission, solid circles indicate pilot sub-carriers, gray-shaded circles represent sub-carriers reserved for PAPR reduction. Pilot sub-carriers are required at the receiver to enable tasks like channel estimation and frequency synchronization. The receiver knows the positions and the values of these pilot sub-carriers and can exploit this information for the above-mentioned tasks.

The conventional method for PAPR reduction based on reserved tones in multi-carrier transmission systems like OFDM works as follows:

A fixed number of sub-carriers is reserved for PAPR reduction. Each of the reserved sub-carriers is modulated in such a way that the resulting multi-carrier transmit signal in time domain has a peak-to-average power ratio, which satisfies predefined requirements. The data for modulating the reserved sub-carriers is chosen in such a way that the PAPR value of the OFDM symbol is minimized. Thus, the reserved sub-carriers do not carry any information and have to be discarded at the receiver.

Such a conventional solution to reduce PAPR in an OFDM communication system is known, for instance, from US Patent application US 2005/0238110 A1. The system includes N sub-carriers, among which a fixed number L of sub-carriers are reserved in every OFDM symbol for PAPR reduction. The reserved sub-carriers do not carry any useful information and are therefore discarded at the receiver. The data values of the reserved sub-carriers are adjusted depending on the OFDM symbol that is transmitted and are chosen so as to reduce the PAPR of the transmitted OFDM symbol. The number of reserved sub-carriers is fixed and wastes therefore a constant amount of bandwidth.

SUMMARY OF THE INVENTION

The aim of the present invention is to provide an improved method for PAPR reduction that can achieve a high data rate.

This is achieved by the features as set forth in the independent claims.

Preferred embodiments are the subject matter of dependent claims.

It is the particular approach of the present invention to employ a variable number sub-carriers for PAPR reduction. In this manner, a minimum number of sub-carriers may be determined on a symbol-to-symbol basis that have to be reserved for PAPR reduction whereas all non-reserved sub-carriers can be employed for data transmission.

According to a first aspect of the present invention, a method for transmitting a transmit signal in a broadband communication system employing a plurality of sub-carriers is provided. The method comprises the steps of reserving a number of sub-carriers of the plurality of sub-carriers for peak-to-average power ratio reduction, modulating sub-carriers of the plurality of sub-carriers other than the reserved sub-carriers in accordance with transmit data, and modulating the reserved sub-carriers in accordance with dummy data being adapted to reduce the peak-to-average power ratio of the resulting transmit signal below a predefined threshold, and is characterized by setting the number of sub-carriers to be reserved in accordance with the transmit data.

According to a second aspect of the present invention, a method for receiving a transmit signal in a broadband communication system employing a plurality of sub-carriers is provided. The method comprises the steps of reserving a number of sub-carriers of the plurality of sub-carriers and obtaining transmit data by demodulating sub-carriers of the plurality of sub-carriers other than the reserved sub-carriers, and is characterized by setting the number of sub-carriers to be reserved in accordance with the transmit data.

According to a further aspect of the present invention, a transmitter for transmitting a transmit signal in a broadband communication system employing a plurality of sub-carriers is provided. The transmitter comprises a reserving unit adapted for reserving a number of sub-carriers of the plurality of sub-carriers for peak-to-average power ratio reduction and a modulator adapted for modulating sub-carriers of the plurality of sub-carriers other than the reserved sub-carriers in accordance with transmit data and for modulating the reserved sub-carriers in accordance with dummy data being adapted to reduce the peak-to-average power ratio of the resulting transmit signal below a predefined threshold, and is characterized by a control unit adapted for setting the number of sub-carriers to be reserved in accordance with the transmit data.

According to a further aspect of the present invention, a receiver for receiving a transmit signal in a broadband communication system employing a plurality of sub-carriers is provided. The receiver comprises a reserving unit adapted for reserving a number of sub-carriers of the plurality of sub-carriers and a demodulator adapted for obtaining transmit data by demodulating sub-carriers of the plurality of sub-carriers other than the reserved sub-carriers, and is characterized by a control unit adapted for setting the number of sub-carriers to be reserved in accordance with the transmit data.

Preferably, at least one predefined sub-carrier other than the reserved sub-carriers is modulated in accordance with signaling information, said signaling information indicating the reserved sub-carriers. At the receiver side, the signaling information may then be recovered by demodulating the at least one predefined sub-carrier other than the reserved sub-carriers. The signaling information preferably comprises an indication of the number of reserved sub-carriers. The receiver may then judge from the signaled number of reserved sub-carriers which of the sub-carriers are to be discarded. The signaling information may also comprises an indication of which sub-carriers of the plurality of sub-carriers have been reserved. In this manner, the receiver can readily identify the reserved sub-carriers and discard the corresponding dummy data.

Preferably, a minimum number of sub-carriers that have to be reserved so that the peak-to-average power ratio of the transmit signal can be reduced below the predefined threshold is determined and the number of sub-carriers to be reserved is set to the determined minimum number. In this manner, the loss of transmission capacity that is due to the reservation of sub-carriers for PAPR reduction can be reduced and the gain of transmission capacity can be employed for data transmission.

Preferably, the minimum number of sub-carriers that have to be reserved is determined by sequentially testing a plurality of candidate minimum numbers. Further, the plurality of candidate minimum numbers preferably comprises 0%, 0.5%, 1%, and 1.5% of the number of sub-carriers employed by the broadband communication system. In this manner, the computational effort for optimizing the number of reserved sub-carriers is reduced and a reasonable compromise between computational effort and gain in transmission data rate can be found.

Preferably, the dummy data is adapted by performing an optimization algorithm that aims at a minimization of the peak-to-average power ratio of the resulting transmit signal. In this manner, the transmit signal with the best transmission properties will be generated.

Preferably, the number of reserved sub-carriers is increased, if the optimization algorithm fails to reduce the peak-to-average power ratio of the resulting transmit signal below the predefined threshold. Hence, a conventional algorithm for PAPR-reduction can be employed as a black box to adapt the dummy data. If the algorithm fails for a given number of reserved sub-carriers, a larger number of reservations is tested until the algorithm finally succeeds or an exit criterion such as a maximum number of iterations or reservations is met. This provides a straightforward implementation of the present invention by employing conventional reserved-tone PAPR reduction algorithms.

The present invention is preferably applicable to broadband communication systems that employ orthogonal frequency-division multiplexing, and in particular to digital video broadcasting systems. In this context, the transmit signal corresponds to one orthogonal frequency-division multiplexing symbol. In this manner, the PAPR reduction can be performed on a symbol-by-symbol basis.

The above and other objects and features of the present invention will become more apparent from the following description and preferred embodiments given in conjunction with the accompanying drawings, in which:

Fig. 1    is a graph showing an exemplary time domain signal of an OFDM symbol;

Fig. 2    is a schematic diagram illustrating the power efficiency versus the input power of a class-A amplifier;

Fig. 3    is a graph showing PAPR values of several consecutive exemplary OFDM symbols;

Fig. 4    is a schematic diagram illustrating the conventional method of allocating a fixed number of sub-carriers to PAPR-reduction;

Fig. 5    is a schematic diagram illustrating a method according to an embodiment of the present invention, wherein a variable number of sub-carriers is allocated dynamically to PAPR-reduction;

Fig. 6    is a schematic diagram illustrating the distribution of PAPR signaling subcarriers in an OFDM symbol;

Fig. 7    is a flow chart illustrating a method for PAPR reduction according to an embodiment of the present invention; and

Fig. 8    is a flow chart illustrating part of a method for PAPR reduction according to an embodiment of the present invention.

DETAILED DESCRIPTION

The present invention provides a dynamic allocation of the number of PAPR reduction sub-carriers. Only a minimum number of sub-carriers are allocated to meet the PAPR reduction target. This number of sub-carriers is dynamically determined on a symbol-by-symbol basis. The remaining, non-allocated sub-carriers can be used for data transmission, thus increasing the data rate.

According to an embodiment of the present invention, a minimum number of sub-carriers are allocated in an initial step, modulated and the PAPR reduction is calculated. If the required PAPR for the current symbol is reached with this initial number of sub-carriers, then there is no need to allocate any further sub-carriers in the current symbol. Otherwise, stepwise more sub-carriers are allocated for PAPR reduction, modulated, and the PAPR reduction is calculated. The allocation of additional sub-carriers is repeated, until the required PAPR is reached.

This dynamic allocation ensures that only the minimum amount of PAPR sub-carriers is allocated and that the remaining sub-carriers can be used for data transmission. At most, as many sub-carriers need to be allocated as in the conventional method described in conjunction with Fig. 4. In all other cases, the remaining sub-carriers can be used for data transmission, thus resulting in an increased data rate.

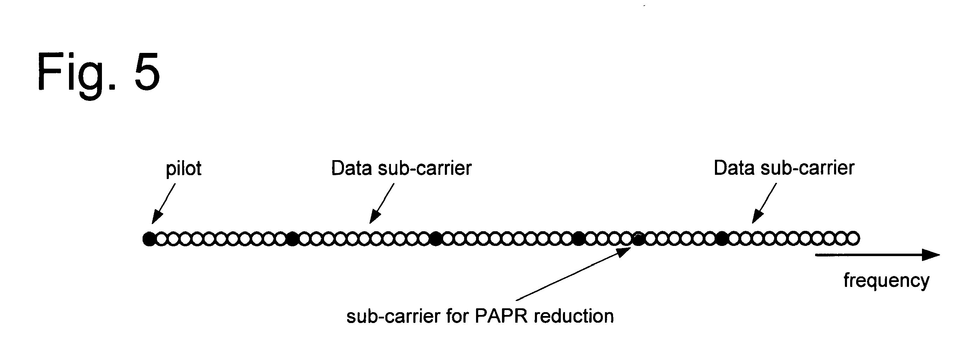

Figure 5 illustrates the inventive approach of PAPR reduction. Similar to Fig. 4, the plurality of sub-carriers is represented by circles. Open circles are sub-carriers used for data transmission, solid circles indicate pilot sub-carriers, gray-shaded circles represent sub-carriers reserved for PAPR-reduction. In contrast to Fig. 4, however, the number of reserved sub-carriers is not predetermined. Therefore, a reduced number of sub-carriers is reserved in accordance with the transmit data.

Since the number of sub-carriers employed for PAPR reduction is no longer fixed, the receiver does no longer know which sub-carriers to discard. In order to solve this problem, the information about the sub-carriers employed for PAPR reduction may be signaled to the receiver for each OFDM symbol. This can be achieved, for example, by reserving some of the data sub-carriers of an OFDM symbol for transmitting the signaling information.

According to a preferred embodiment of the present invention, the signaling information merely includes a reference to one of a plurality of possible numbers of sub-carriers employed for PAPR reduction. One solution could be to store a fixed look-up table for determining the used percentage of PAPR reduction sub-carriers in the receiver. In this case, the receiver knows beforehand all locations of the sub-carriers that could be involved in PAPR reduction. This means the receiver has a fixed table of sub-carrier positions and a corresponding portion of these is mapped to each PAPR reservation percentage value. Thus all PAPR sub-carrier positions are fixed and known to the receiver. An example for such a look-up table is shown here below.

**Table 1:** Fixed PAPR reservation look-up table at the receiver

| Bit value | PAPR reservation |
|-----------|------------------|
| 00 | 0% |
| 01 | 0,5% |
| 10 | 1% |
| 11 | 1,5% |

The signaling information may thus be transmitted in a manner similar to the TPS (Transmission Parameter Signaling) data in DVB-T. The TPS sub-carriers are used for the purpose of signaling parameters related to the transmission scheme, i.e. to channel coding and modulation. The sub-carrier indices for TPS data are fixed as specified in the DVB-T standard EN 344 700.

For future OFDM applications such a fixed allocation pattern can be applied to the sub-carriers used for PAPR reduction and the corresponding signaling bits as indicated in Table 1.

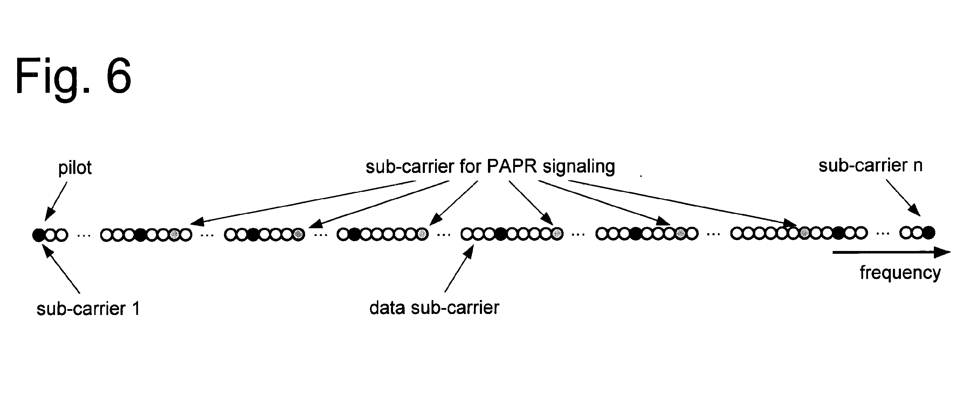

In case of using two bits for PAPR signaling, these two bits may be included at certain fixed positions within every transmitted OFDM symbol. These bit positions/sub-carriers will carry the information about the used amount of PAPR reduction carriers in every symbol. Due to the importance of this PAPR signaling data there is a high need for very robust transmission of these information. Therefore the number of reserved carriers depends on the applied modulation and forward error correction. For a preferred embodiment the modulation of these reserved carriers would be binary phase-shift keying (BPSK). Instead of forward error correction some redundancy would be applied to the PAPR signaling information. Thus the two bits would be replicated several times and transmitted parallel on several sub-carriers in the same OFDM symbol. This is illustrated in Figure 6, which shows six reserved sub-carrier positions (light gray-filled circles) carrying three times redundantly the same information.

The mapping of the signaling bits to the sub-carrier positions can be done straight forward. Starting with the MSB of the two bits at the first signaling sub-carrier position and mapping the LSB to the next sub-carrier position. The next redundant set is mapped accordingly. The fixed sub-carrier positions for the PAPR signaling bits are evenly spread over the complete OFDM symbol sub-carrier range to exploit frequency diversity.

After the fast Fourier transformation (FFT) in the receiver, the information about how many sub-carriers are allocated for PAPR reduction can be retrieved from these signaling sub-carrier positions. By exploiting this information the sub-carrier positions carrying payload data can be identified, too.

The number of signaling bit is not restricted to two. Rather, a greater or smaller number of bits may be used to allow for a greater or smaller number of possible percentages of reserved sub-carriers. Furthermore, the allocation pattern may be variable and the positions of the sub-carriers involved in PAPR reduction may also be signaled to the receiver dynamically during transmission.

The present invention is not restricted to a particular form of signaling. In general, any form of conveying the relevant information on the reserved sub-carriers to the receiver may be employed, including explicitly signaling both number and location of reserved sub-carriers. Moreover, the invention may even be carried out without signaling the reserved sub-carriers to the receiver, provided that there are only a few options for the number and location of PAPR sub-carriers so that the receiver may sequentially test all options and choose the one by which the received data can be decoded successfully.

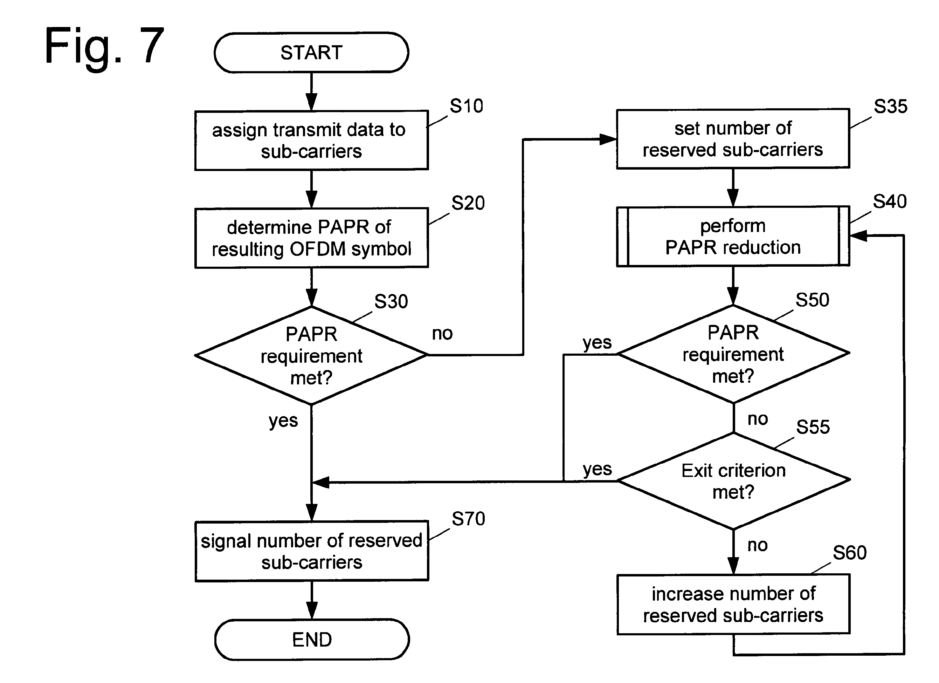

Figure 7 is a flow chart illustrating the inventive method of dynamically allocating reserved tones for PAPR reduction.

In step S10, transmit data is assigned to all available sub-carriers with no sub-carriers reserved for PAPR reduction. In step S20, the PAPR value of the resulting OFDM symbol is determined. This step may include the computation of the resulting transmit signal, i.e. the modulation of each sub-carrier in accordance with either the transmit or the dummy data assigned and the summation of the sub-carrier signals. More specifically, this step may include the computation of an inverse discrete Fourier transformation in order to determine the OFDM symbol in time domain.

In step S30 it is determined whether the OFDM symbol meets the PAPR requirement, e.g. whether the determined PAPR value does not exceed a predetermined threshold value. If the result of this step is positive, no further PAPR reduction is needed and the procedure proceeds to step S70. If the result is negative, the PAPR of the current OFDM symbol has to be reduced. To this end, a minimum number of sub-carriers to be reserved for PAPR reduction is set in step S35. This number may, for instance, amount to 0.5% of the total number of sub-carriers.

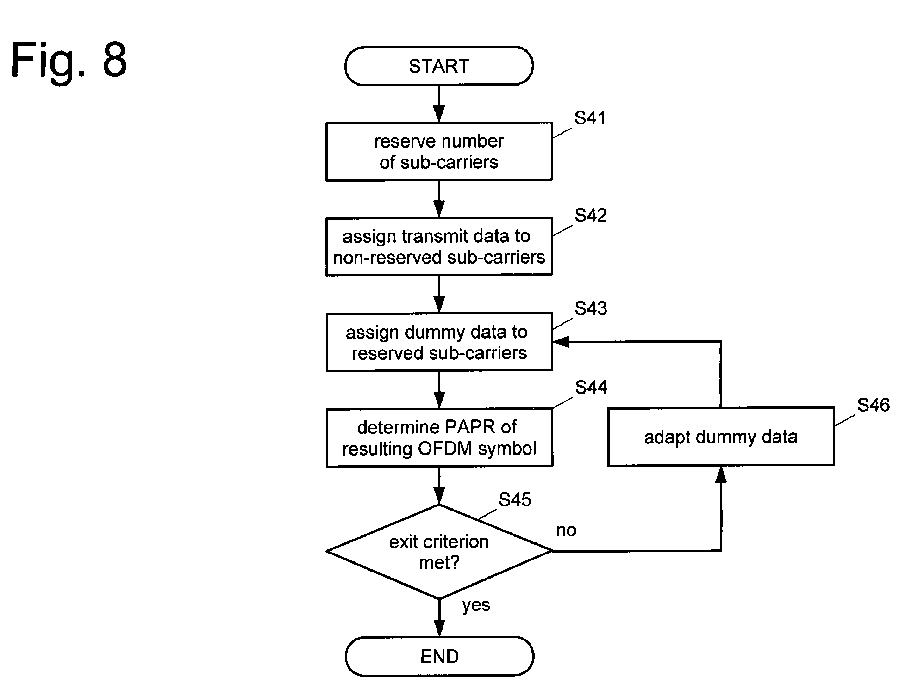

PAPR reduction is then achieved in step S40, wherein dummy data is assigned to the set number of reserved sub-carriers so as to reduce the PAPR value of the current symbol. Details of this process will be explained below in conjunction with Fig. 8. However, various schemes of optimally modulating the sub-carriers for PAPR reduction are known in the art and may be employed without departing from the present invention. Similarly, the scheme for selecting the position of the pilot sub-carriers for PAPR reduction shown in the figures is merely exemplary so that any scheme may be employed without departing from the present invention.

In step S50 it is determined, whether the PAPR reduction was successful, i.e. whether the resulting OFDM symbol meets the PAPR requirements. If the result of this step is positive, no further PAPR reduction is needed and the procedure proceeds to step S70. If the result is negative, an exit criterion may be tested in step S55. This exit criterion may comprise, for instance, a test to determine whether a predetermined number of iterations has been exceeded in order to avoid an ad infinitum recursion and/or a test to determine whether the maximum number of available PAPR reduction sub-carriers has been reached. If the exit criterion is met, the procedure proceeds to step S70. Otherwise, the number of sub-carriers that are to be reserved for PAPR reduction is increased in step S60 and a further attempt is taken in step S40 to reduce the PAPR value of the current OFDM symbol. The steps S40-S60 are iterated until the PAPR requirements are finally met and the process proceeds to step S70, wherein the sub-carriers that have actually been used for PAPR reduction are signaled to the receiver.

It is to be noted that the above process is merely illustrative and that deviations and modifications are possible without deviating from the present invention. For example, steps S10-S30 may be omitted so that the process may directly start with step S35, i.e., by setting the number of reserved sub-carriers to a (non-zero) minimum percentage of the plurality of sub-carriers employed by the communication system. Further, the signaling step S70 is optional, since the present invention may also be carried out without signaling as explained above.

Further, the number of sub-carriers available for data transmission and hence the channel capacity is varying over time due to dynamic allocation of PAPR reduction sub-carriers. This has some practical implications regarding the allocation of payload data to a plurality of consecutive symbols. However, the allocation of payload data to consecutive symbols can most easily be achieved by assigning payload data only to sub-carriers that are not used for PAPR reduction in any case, i.e., only to data sub-carriers used for data transmission according to the conventional PAPR reduction method, and to employ the sub-carriers gained by the inventive method, i.e., PAPR reduction sub-carriers currently not used for PAPR reduction, for instance because PAPR requirements could already be met by employing a smaller number of PAPR sub-carriers, for transmitting a separate data stream on a best effort basis. This data stream could be used for non real-time applications like, e.g., file transfer. The available data rate for this stream varies with the number of not used PAPR reduction sub-carriers. Thus, the number of reserved sub-carriers that are not used for PAPR reduction will carry the separate data stream, which is totally independent from the payload data transmitted by the data sub-carriers.

Figure 8 is a flow chart illustrating the PAPR reduction process for a given number of reserved sub-carriers.

In step S41, the set number of sub-carriers is reserved for PAPR reduction. In steps S42 and S43, transmit data and dummy data is assigned to non-reserved sub-carriers and reserved sub-carriers, respectively. In step S44, the PAPR value of the resulting OFDM symbol is determined. This step may be performed in analogy to step S20 of Fig. 7. In step S45 it is determined whether an exit criterion is met. This exit criterion comprises a test whether the OFDM symbol meets the PAPR requirement, e.g. whether the determined PAPR value does not exceed a predetermined threshold value. This test is performed in analogy to steps S30 and S50 in Fig. 7. The exit criterion may further comprise a test to determine whether a predetermined number of iterations has been exceeded in order to avoid an ad infinitum recursion. If the exit criterion has not been met, the dummy data assigned to the reserved sub-carriers is adapted in step S46 so as to reduce the PAPR value of the resulting symbol. Adapting the dummy data may be performed according to any conventional method for PAPR reduction based on a fixed number of reserved tones. Generally, any conventional algorithm for (discrete, multi-dimensional) nonlinear optimization may be used. Preferably, a gradient algorithm or a multi-gradient algorithm as described in the above cited US patent application is employed. Steps S43 to S46 are iterated until the exit criterion is met.

Summarizing, the present invention relates to a method for reducing peak-to-average power ratio (PAPR) in an Orthogonal Frequency Division Multiplexing (OFDM) communication system, and more particularly, to a method for reducing PAPR in an OFDM communication system by allocating sub-carriers to a tone reservation scheme. According to the present invention, a variable number of sub-carriers is reserved for PAPR reduction. This number of sub-carriers is dynamically determined to meet the PAPR reduction target on a symbol-by-symbol basis. This allows the use of a reduced number of reserved sub-carriers depending on the actual payload data. The remaining non reserved sub-carriers can be used for data transmission, thus increasing the data rate.

**Claims**

1. A method for transmitting a transmit signal in a broadband communication system employing a plurality of sub-carriers, the method comprising the steps of:

   reserving (S41) a number of sub-carriers of the plurality of sub-carriers for peak-to-average power ratio reduction;
   modulating (S42) sub-carriers of the plurality of sub-carriers other than the reserved sub-carriers in accordance with transmit data; and
   modulating (S43) the reserved sub-carriers in accordance with dummy data being adapted to reduce the peak-to-average power ratio of the resulting transmit signal below a predefined threshold;

   **characterized by**
   setting (S35, S60) the number of sub-carriers to be reserved in accordance with the transmit data.

2. A method according to claim 1, further comprising the step of modulating at least one predefined sub-carrier other than the reserved sub-carriers in accordance with signaling information, said signaling information indicating the reserved sub-carriers.

3. A method according to claim 2, wherein the signaling information comprises an indication of the number of reserved sub-carriers.

4. A method according to claim 2 or 3, wherein the signaling information comprises an indication of which sub-carriers of the plurality of sub-carriers have been reserved.

5. A method according to any of claims 1 to 4, further comprising the step of
   determining (S40, S50, S60) a minimum number of sub-carriers that have to be reserved so that the peak-to-average power ratio of the transmit signal can be reduced below the predefined threshold, wherein the number of sub-carriers to be reserved is set to the determined minimum number.

6. A method according to claim 5, wherein the determining step (S40, S50, S60) determines the minimum number of sub-carriers that have to be reserved by sequentially testing a plurality of candidate minimum numbers.

7. A method according to claim 6, wherein the plurality of candidate minimum numbers comprises 0%, 0.5%, 1%, and 1.5% of the number of sub-carriers employed by the broadband communication system.

8. A method according to any of claims 1 to 7, further comprising the step of adapting (S40) the dummy data by performing an optimization algorithm that aims at a minimization of the peak-to-average power ratio of the resulting transmit signal.

9. A method according to claim 8, further comprising the step of increasing (S60) the number of reserved sub-carriers if the optimization algorithm fails to reduce the peak-to-average power ratio of the resulting transmit signal below the predefined threshold.

10. A method for receiving a transmit signal in a broadband communication system employing a plurality of sub-carriers, the method comprising the steps of:

    reserving a number of sub-carriers of the plurality of sub-carriers; and
    obtaining transmit data by demodulating sub-carriers of the plurality of sub-carriers other than the reserved sub-carriers;

    **characterized by**
    setting the number of sub-carriers to be reserved in accordance with the transmit data.

11. A method according to claim 10, further comprising the step of obtaining signaling information by demodulating at least one predefined sub-carrier other than the reserved sub-carriers, said signaling information indicating the sub-carriers to be reserved.

12. A method according to claim 11, wherein the signaling information comprises an indication of the number of sub-carriers to be reserved.

13. A method according to claim 11 or 12, wherein the signaling information comprises an indication of which sub-carriers of the plurality of sub-carriers are to be reserved.

14. A method according to claim 10, wherein the sub-carriers are reserved in accordance with a predefined plurality of candidate numbers of sub-carriers to be reserved.

15. A method according to claim 10 or 14, wherein the sub-carriers are reserved in accordance with a predefined plurality of indices indicating candidate sub-carriers to be reserved.

16. A transmitter for transmitting a transmit signal in a broadband communication system employing a plurality of sub-carriers, the transmitter comprising:

a reserving unit adapted for reserving (S41) a number of sub-carriers of the plurality of sub-carriers for peak-to-average power ratio reduction; and
a modulator adapted for modulating (S42) sub-carriers of the plurality of sub-carriers other than the reserved sub-carriers in accordance with transmit data and for modulating (S43) the reserved sub-carriers in accordance with dummy data being adapted to reduce the peak-to-average power ratio of the resulting transmit signal below a predefined threshold;

**characterized by**
a control unit adapted for setting (S35, S60) the number of sub-carriers to be reserved in accordance with the transmit data.

17. A transmitter according to claim 16, wherein the modulator is further adapted for modulating at least one predefined sub-carrier other than the reserved sub-carriers in accordance with signaling information, said signaling information indicating the reserved sub-carriers.

18. A transmitter according to claim 17, wherein the signaling information comprises an indication of the number of reserved sub-carriers.

19. A transmitter according to claim 17 or 18, wherein the signaling information comprises an indication of which sub-carriers of the plurality of sub-carriers have been reserved.

20. A transmitter according to any of claims 16 to 19, wherein the control unit is further adapted for determining (S40, S50, S60) a minimum number of sub-carriers that have to be reserved so that the peak-to-average power ratio of the transmit signal can be reduced below the predefined threshold, and wherein the number of sub-carriers to be reserved is set to the determined minimum number.

21. A transmitter according to claim 20, wherein the control unit determines the minimum number of sub-carriers that have to be reserved by sequentially testing a plurality of candidate minimum numbers.

22. A transmitter according to claim 21, wherein the plurality of candidate minimum numbers comprises 0%, 0.5%, 1%, and 1.5% of the number of sub-carriers employed by the broadband communication system.

23. A transmitter according to any of claims 1 to 22, wherein the control unit is further adapted for adapting (S40) the dummy data by performing an optimization algorithm that aims at a minimization of the peak-to-average power ratio of the resulting transmit signal.

24. A transmitter according to claim 23, wherein the control unit is further adapted for increasing (S60) the number of reserved sub-carriers if the optimization algorithm fails to reduce the peak-to-average power ratio of the resulting transmit signal below the predefined threshold.

**25.** A receiver for receiving a transmit signal in a broadband communication system employing a plurality of sub-carriers, the receiver comprising:

> a reserving unit adapted for reserving a number of sub-carriers of the plurality of sub-carriers; and
> a demodulator adapted for obtaining transmit data by demodulating sub-carriers of the plurality of sub-carriers other than the reserved sub-carriers;

> **characterized by**
> a control unit adapted for setting the number of sub-carriers to be reserved in accordance with the transmit data.

**26.** A receiver according to claim 25, further comprising the step of obtaining signaling information by demodulating at least one predefined sub-carrier other than the reserved sub-carriers, said signaling information indicating the sub-carriers to be reserved.

**27.** A receiver according to claim 26, wherein the signaling information comprises an indication of the number of sub-carriers to be reserved.

**28.** A receiver according to claim 26 or 27, wherein the signaling information comprises an indication of which sub-carriers of the plurality of sub-carriers are to be reserved.

**29.** A receiver according to claim 25, wherein the sub-carriers are reserved in accordance with a predefined plurality of candidate numbers of sub-carriers to be reserved.

**30.** A receiver according to claim 25 or 29, wherein the sub-carriers are reserved in accordance with a predefined plurality of indices indicating candidate sub-carriers to be reserved.

**31.** A method or apparatus according to any of claims 1 to 30, wherein the broadband communication system employs orthogonal frequency-division multiplexing and the transmit signal corresponds to one orthogonal frequency-division multiplexing symbol.

**32.** A method or apparatus according to any of claims 1 to 31, wherein the broadband communication system is a digital video broadcasting system.

Fig. 1

Number of Samples in OFDM Symbol (FFT Size)

# Fig. 2

EP 2 056 553 A1

# Fig. 3

# Fig. 4

pilot

Data sub-carrier

frequency

sub-carrier for PAPR reduction

# Fig. 5

pilot           Data sub-carrier                     Data sub-carrier

frequency

sub-carrier for PAPR reduction

# Fig. 6

pilot

sub-carrier for PAPR signaling

sub-carrier n

sub-carrier 1

data sub-carrier

frequency

EP 2 056 553 A1

**Fig. 7**

START

assign transmit data to sub-carriers — S10

determine PAPR of resulting OFDM symbol — S20

PAPR requirement met? — S30 — no → set number of reserved sub-carriers — S35

set number of reserved sub-carriers — S35

perform PAPR reduction — S40

PAPR requirement met? — S50 — yes

no → Exit criterion met? — S55 — yes

no → increase number of reserved sub-carriers — S60

yes → signal number of reserved sub-carriers — S70

END

EP 2 056 553 A1

# Fig. 8

EP 2 056 553 A1

**European Patent Office**

**EUROPEAN SEARCH REPORT**

Application Number

EP 07 02 1302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/086686 A (LG ELECTRONICS INC [KR]; HAN SEUNG HEE [KR]; NOH MIN SEOK [KR]; KWON Y) 2 August 2007 (2007-08-02)<br><br>* page 3, paragraph 1 *<br>* page 13, line 15 - line 18 *<br>* page 14, last paragraph *<br>* page 17, line 7 - page 18, line 3 * | 1-4,8, 10-13, 16-19, 23, 25-28, 31,32 | INV.<br>H04L27/26 |
| A | | 5-7,9, 14,15, 20-22, 24,29,30 | |
| X | BOUQUET E ET AL: "An innovative and low complexity PAPR reduction technique for multicarrier systems"<br>PROCEEDINGS OF THE 9TH EUROPEAN CONFERENCE ON WIRELESS TECHNOLOGY (IEEE CAT. NO.06EX1407),<br>10 September 2006 (2006-09-10), - 12 September 2006 (2006-09-12) pages 162-165, XP002477807<br>IEEE PISCATAWAY, NJ, USA<br>* abstract *<br>* Section III * | 1-5,8,9, 16-20, 23,24, 31,32 | |
| | | | TECHNICAL FIELDS SEARCHED (IPC)<br><br>H04L |
| A | | 6,7, 10-15, 21,22, 25-30 | |
| A | US 2007/071120 A1 (TALWAR SHILPA [US]) 29 March 2007 (2007-03-29)<br>* paragraph [0012] *<br>* paragraph [0016] *<br>* paragraph [0023] - paragraph [0024] *<br>-----<br>-/-- | 1-32 | |

The present search report has been drawn up for all claims

| Place of search | Date of completion of the search | Examiner |
|---|---|---|
| The Hague | 6 May 2008 | Koukourlis, Sotirios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 02 1302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2005/238110 A1 (YUN SUNG-RYUL [KR] ET AL) 27 October 2005 (2005-10-27) * abstract * | 1-32 | |

TECHNICAL FIELDS SEARCHED (IPC)

The present search report has been drawn up for all claims

| Place of search | Date of completion of the search | Examiner |
|---|---|---|
| The Hague | 6 May 2008 | Koukourlis, Sotirios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 056 553 A1

## ANNEX TO THE EUROPEAN SEARCH REPORT
## ON EUROPEAN PATENT APPLICATION NO.

EP 07 02 1302

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2008

| Patent document cited in search report | | Publication date | Patent family member(s) | | Publication date |
|---|---|---|---|---|---|
| WO 2007086686 | A | 02-08-2007 | KR | 20070077622 A | 27-07-2007 |
| US 2007071120 | A1 | 29-03-2007 | NONE | | |
| US 2005238110 | A1 | 27-10-2005 | KR | 20050102799 A | 27-10-2005 |

EPO FORM P0459

For more details about this annex : see Official Journal of the European Patent Office, No. 12/82

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050238110 A1